(19) Europäisches Patentamt
European Patent Office
Office européen des brevets

(11) **EP 1 694 892 B1**

(12) **FASCICULE DE BREVET EUROPEEN**

(45) Date de publication et mention de la délivrance du brevet:
**30.09.2009 Bulletin 2009/40**

(21) Numéro de dépôt: **04816512.0**

(22) Date de dépôt: **06.12.2004**

(51) Int Cl.:
**D03D 13/00** $^{(2006.01)}$

(86) Numéro de dépôt international:
**PCT/FR2004/050658**

(87) Numéro de publication internationale:
**WO 2005/061769 (07.07.2005 Gazette 2005/27)**

(54) **TEXTILE TISSE, A BASE DE FILS DE VERRE, DESTINE A FORMER DES RENFORTS POUR PIECES MOULEES.**

GLASFASERGARN BASIERTES GEWEBE ZUR ARMIERUNG VON FORMKÖRPERN

FIBREGLASS YARN-BASED WOVEN CLOTH FOR REINFORCING MOULDED PARTS

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.12.2003 FR 0351100**

(43) Date de publication de la demande:
**30.08.2006 Bulletin 2006/35**

(73) Titulaire: **CHOMARAT COMPOSITES**
**75002 Paris (FR)**

(72) Inventeur: **SERILLON, Michel**
**F-07160 Mariac (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**EP-A- 0 193 479       WO-A-97/37835**
**US-A- 4 055 697       US-A- 4 438 173**
**US-B1- 6 443 186**

EP 1 694 892 B1

## Description

### Domaine Technique

L'invention se rattache au domaine des textiles techniques. Plus précisément, elle concerne les textiles employés pour former des renforts dans des pièces obtenues par moulage, et plus précisément par les techniques de moulage par transfert de résine, techniques connues sous l'abréviation de RTM.

L'invention vise plus précisément la réalisation de renforts multi-axiaux, c'est-à-dire possédant des fils orientés selon au moins trois directions.

### Techniques antérieures

De façon générale, les pièces obtenues par moulage RTM présentent une résistance mécanique qui est définie par la structure d'un renfort textile intégré. C'est pourquoi il est préférable d'employer des renforts dits "multi-axiaux", c'est-à-dire présentant au moins trois directions de résistance privilégiées. En effet, de tels renforts confèrent en effet une meilleure rigidité que les renforts unidirectionnels, voire bidirectionnels, réalisés par tissage de fils de chaîne et trame perpendiculaires.

A ce jour, plusieurs types de renforts multi-axiaux ont déjà été proposés. Ainsi, on connaît, notamment par le document EP 0 193 479 du Demandeur, des textiles tissés comportant des fils de chaîne et de trame non perpendiculaires. L'inclinaison non perpendiculaire des fils de trame et de chaîne s'obtient par un enroulement décalé en sortie du métier à tisser. Pour que ces opérations soient possibles, il est généralement nécessaire que les fils de chaîne soient particulièrement fins en comparaison avec les fils de trame, pour autoriser la déformation du tissu avant son enroulage. Il est ensuite possible de combiner les directions de renforcement en superposant deux couches de ces textiles, en disposant les fils de trame de manière symétrique par rapport à la direction commune des fils de chaîne. On associe ensuite cet ensemble avec le tissu comportant les fils de chaîne de plus fort titre, pour obtenir un renfort tridirectionnel. L'assemblage de ces différentes couches peut se faire par couture ou collage.

Toutefois, ce type de renfort présente certains inconvénients. En effet, pour réaliser des renforts tridirectionnels, il est nécessaire d'assembler trois couches différentes, ce qui rend la fabrication relativement longue et donc coûteuse. Le renfort obtenu présente également une épaisseur relativement importante, ce qui peut perturber les opérations ultérieures de moulage , notamment à cause de difficultés de diffusion de la résine. Par ailleurs, le renfort ainsi obtenu se compose donc d'une pluralité de couches qui contribuent pour chacune à la résistance mécanique dans un axe déterminé. Autrement dit, la direction de rigidification n'est pas homogène dans l'épaisseur du renfort.

Par ailleurs, on connaît d'autres types de renforts réalisés selon des techniques connues sous l'appellation de *"crossply"*. Ces textiles sont obtenus par la superposition de deux nappes de fils pouvant présenter des titres similaires, qui sont disposées par des trameurs multidirectionnels. Ces différentes nappes, qui ne sont pas enchevêtrées mais simplement superposées, sont ensuite solidarisées les unes aux autres par des opérations de couture selon les techniques connues sous l'appellation de *Malimo.* Ces renforts dits *"crossply"* sont intéressants en ce qu'ils intègrent des fils d'orientations différentes, qui sont associés par une opération unique de couture. Toutefois, la superposition de ces différentes couches fait que l'orientation de la rigidification n'est pas homogène au sein de l'épaisseur du renfort. En outre et surtout, la couture des différentes couches entre elles limite très fortement la déformabilité du renfort, et empêche donc son emploi pour réaliser des pièces de géométrie complexes, ou plus généralement incluant des ruptures de pente importantes.

Par ailleurs, on, connaît par le document US 4,055,697, un renfort réalisé à base de tissus dont les fils de trame présentent une orientation non perpendiculaire aux fils de trame. Ce type de renfort destiné à améliorer les propriétés mécaniques dans des directions prédéterminées ne donne pas satisfaction en termes de déformabilité.

L'un des objectifs de l'invention est de fournir un renfort pour des moulages RTM, qui soit réalisable avec un nombre d'étapes de fabrication limité. Un autre objectif est d'obtenir un renfort qui présente une rigidification multi-axiale et répartie à l'intérieur même du renfort. Un autre objectif est de permettre d'obtenir des renforts de forte masse surfacique sans multiplier le nombre de couches nécessaires pour sa réalisation. Un autre objectif de l'invention est d'obtenir des renforts qui combinent à la fois un haut pouvoir de rigidification, et une forte capacité à être déformé lors des opérations de moulage ultérieures.

### Exposé de l'invention

L'invention concerne donc un textile tissé, à base de fils de verre, ou plus généralement de fils de haute ténacité tels que aramide ou carbone, qui est destiné à former des renforts pour des pièces obtenues par moulage par transfert de résine (ou RTM). Ce textile tissé comporte dans le sens trame des fils qui ne sont pas perpendiculaires aux fils de chaîne.

Conformément à l'invention, ce textile se caractérise en ce que le rapport $\dfrac{T_c . D_c}{T_t . D_t}$ est compris entre 0,2 et 0,8 , où :

    $T_c$ représente le titre des fils de chaîne,
    $T_t$ représente le titre des fils de trame,
    $D_c$ représente le nombre de fils de chaîne par unité

de longueur,

$D_t$ représente le nombre de fils de trame par unité de longueur.

Autrement dit, l'invention consiste à utiliser, pour former des renforts, des textiles tissés qui comportent, contrairement à l'art antérieur, des fils de chaîne de titre relativement important. Ainsi donc, on a constaté qu'il était possible de réaliser par tissage des textiles qui incluent non seulement des fils de trame, mais également des fils de chaîne de titre important.

En d'autres termes, le textile conforme à l'invention comporte, dans le sens chaîne, des fils qui représentent entre 15 et 45% de la masse surfacique de la couche textile considérée. Cela représente une fraction nettement plus importante que celle observée dans les textiles tissés à fils de trame et de chaîne non perpendiculaires, tel que celui décrit dans le brevet EP 193 479. Contrairement aux idées reçues, on a observé qu'il était possible de déformer un tel textile en sortie de métier à tisser pour obtenir l'inclinaison non perpendiculaire entre les fils de chaîne et les fils de trame.

Cette déformation peut être facilitée par certains schémas d'armure, et notamment dans le cas où on emploie des armures de la famille sergé, et notamment des sergés 2 lie 2, ou 3 lie 1.

Il est donc ainsi possible de réaliser des renforts, en associant au moins deux couches textiles comme décrites ci-avant et en les superposant. Ainsi, ces deux couches sont associées de telle sorte que les fils de chaîne de ces deux couches soient parallèles, les fils de trame présentant alors une inclinaison symétrique par rapport à cette direction des fils de chaîne, d'une couche à l'autre. On obtient ainsi un renfort qui présente une rigidité importante dans au moins trois directions. Il est important de noter que les fils de chaîne des deux couches superposées participent chacun à la résistance mécanique dans la direction de la chaîne. Autrement dit, chacune des couches contribue à la résistance globale dans le sens de la chaîne. En d'autres termes, la résistance mécanique dans le sens de la chaîne est répartie sur l'épaisseur du renfort.

De même, par opposition aux structures du type *crossply,* les fils dirigés selon les trois directions sont accessibles sur les faces extérieures du renfort, et peuvent donc recevoir la résine lors du moulage.

En pratique, il est possible d'associer un nombre de couches variable selon le type de renfort que l'on souhaite obtenir. Ainsi, il est possible d'associer deux couches superposées, dont l'inclinaison des fils de trame par rapport aux fils de chaîne est voisine de 60°. Dans ce cas, le rapport $\dfrac{T_c.D_c}{T_t.D_t}$ défini ci-avant est compris sensiblement entre 0,3 et 0,8. Il est préférentiellement voisin de 0,5. Autrement dit, sur chacune des couches élémentaires du renfort, la chaîne représente sensiblement entre 25 et 45% de la masse surfacique globale de la couche élémentaire, et préférentiellement représente un tiers de cette masse surfacique. Ainsi, lorsque deux couches élémentaires sont associées pour former le renfort global, chacune des couches contribue pour moitié à la résistance dans le sens chaîne. La masse surfacique des fils de chaîne et des fils de trame dans chacune des directions à 60° sont donc sensiblement identiques.

Il est également possible d'associer trois couches élémentaires pour former un renfort quadri-directionnel. Dans ce cas, les deux couches externes présentent des fils de trame inclinés par rapport aux fils de chaîne. Ces deux couches externes prennent en sandwich une couche de textile tissé dont les fils de chaîne et de trame sont perpendiculaires. Dans ce cas, chacune des couches externes présente un rapport $\dfrac{T_c.D_c}{T_t.D_t}$ comme défini précédemment, compris entre 0,2 et 0,8, et sensiblement voisin de 0,33. Rapporté à la masse surfacique globale d'une couche élémentaire, cela revient à dire que la chaîne représente entre 15 et 45%, et préférentiellement 25 % environ. Ainsi, dans le cas où les couches extérieures présentent des fils de trame orientés à 45°, on obtient un renfort quadri-directionnel symétrique. Les trois couches ainsi associées participent avantageusement pour un tiers environ à la rigidité globale du renfort.

En pratique, les couches assemblées pour former ces renforts peuvent l'être de différentes manières, et notamment par couture ou collage. Dans le cas préféré d'un collage, on utilisera avantageusement pour agent de collage un matériau de même nature chimique que celui employé lors du procédé de moulage ultérieur. En effet, dans ce cas, la déformabilité du renfort est optimisée puisque lors du moulage, l'agent de collage se ramollit, et autorise le déplacement des différentes couches les unes par rapport aux autres.

**Description sommaire des dessins**

La manière de réaliser l'invention, ainsi que les avantages qui en découlent, ressortiront bien de la description du mode de réalisation qui suit, à l'appui des figures annexées dans lesquelles :

La figure 1 est une vue de dessus d'une couche élémentaire réalisée conformément à l'invention.
La figure 2 est une vue de dessus d'un renfort formé de deux couches analogues à celle de la figure 1.
La figure 3 est une vue analogue d'un renfort incorporant trois couches, et dont les couches externes sont similaires à celles de la figure 1.

**Manière de réaliser l'invention**

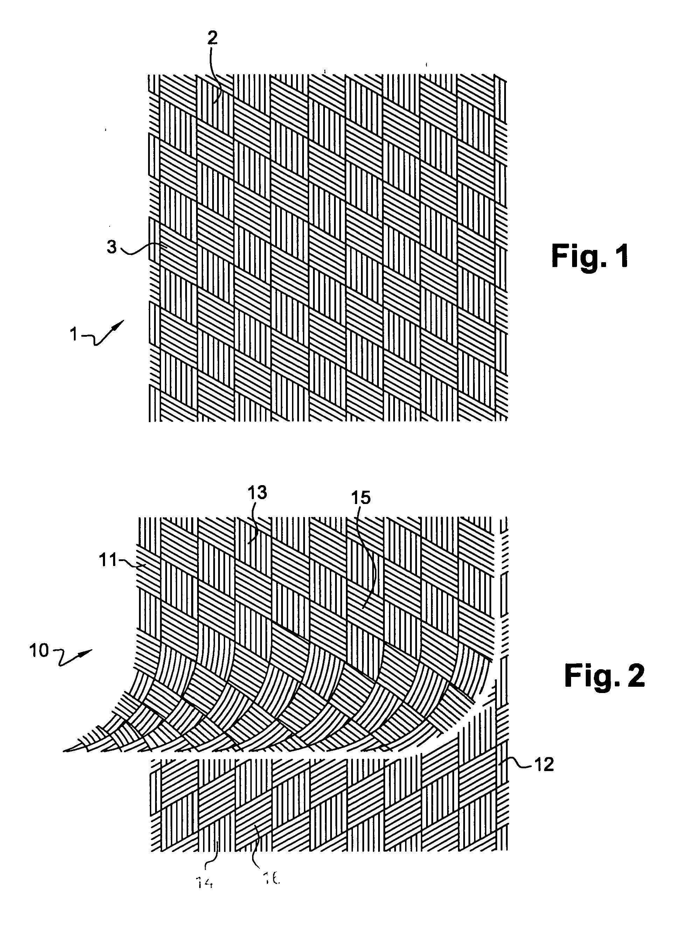

Le textile illustré à la figure 1 illustre un textile (1) réalisé par tissage de fils de chaîne (2) et de trame (3) à base de fils de verre. En pratique, les fils (ou roving) (2) utilisés pour les fils de chaîne présentent un titre compris entre 300 et 2400 tex. On peut compter entre 0,5 et 2 fils/centimètre. En trame, les fils (ou roving) (3) utilisés présentent un titre supérieur, typiquement de l'ordre de 600 à 4800 tex. On compte en trame environ 0,4 à 2,5 fils/centimètre. En pratique, les nombres de fils par centimètre sont donnés avant déformation, et les valeurs observées sur les nappes obtenues après déformation s'en déduisent par des relations trigonométriques, en fonction de l'angle d'inclinaison.

Dans l'exemple illustré à la figure 1, les fils de chaîne et de trame forment entre eux un angle de 60°, mais cette inclinaison peut être différente, et choisie en fonction du nombre de couches associées pour former un renfort.

Ainsi, dans l'exemple illustré à la figure 2, le renfort (10) comporte deux couches similaires associées. Ces deux couches (11, 12) sont solidarisées de telle sorte que les directions de leurs fils de chaîne (13,14) sont parfaitement identiques (et donc à 0° de la direction des fils de chaîne considérée comme la direction de référence). De la sorte, les fils de trame (15) de la couche supérieure (11) (à -60° de la direction de référence) sont symétriques des fils de trame (16) de la couche inférieure (12) (à +60° de la direction de référence) par rapport à la direction chaîne (13,14). L'ensemble ainsi réalisé présente une structure triaxiale symétrique, dans trois directions décalées l'une de l'autre de 60°.

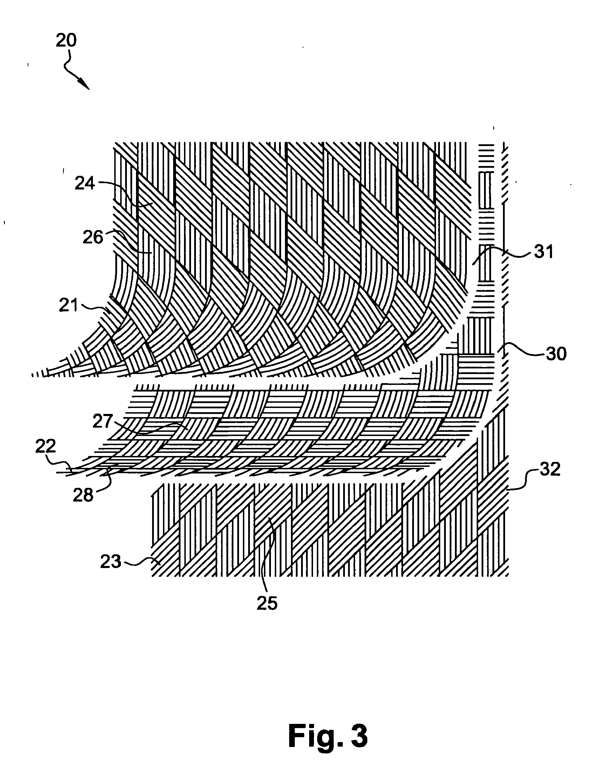

La figure 3 illustre un autre exemple de réalisation d'un renfort formé de trois couches différentes (21,22,23). Les couches externes (21,23) sont formées par tissage de fils de chaîne et trame présentant entre eux un angle de 45°. Ces deux couches (21,23) sont orientées de telle façon que les fils de trame (24) (à -45° de la direction de référence) de la couche supérieure (21) sont symétriques des fils de trame (25) (à +45° de la direction de référence) de la couche inférieure (23) par rapport à la direction commune des fils de chaîne (26). Ces deux couches (21,23) sont séparées par une couche intermédiaire (22) formée par un tissage classique, c'est-à-dire à fils de chaîne (27) et de trame (28) perpendiculaires ( à 0° et 90° de la direction de référence).

Dans un exemple de réalisation particulier, les fils de chaîne (26) de la couche supérieure (21) présentent un titre de 1200 tex, et sont présents à concurrence de 2.55 fils/centimètre. De la sorte, les fils de chaîne (26) de la couche supérieure présentent une masse surfacique d'environ 305 g/m². Les fils de trame (24) présentent quant à eux un titre de 4800 tex, avec une densité de 1.90 fils/cm, représentant donc une masse surfacique de l'ordre de 916 g/m². Les fils de chaîne (26) représentent donc sensiblement un quart de la masse surfacique de la couche supérieure (21). La couche inférieure (23) présente la même composition que la couché supérieure (21), mais orientée symétriquement, avec un angle de 45° opposé.

La couche intermédiaire (22) comporte des fils de chaîne (27) d'un titre de 1200 tex, avec une densité de 2.50 fils/cm, correspondant donc à une masse surfacique en chaîne de l'ordre de 300 g/m². Les fils de trame (28) présentent un titre de 4800 tex qui sont présents à concurrence de 1.90 fils/cm, représentant donc une masse surfacique de 912 g/m².

Les différentes couches (21,22,23) sont associées entre elles par des couches d'agent liant (30,31), typiquement à base de résine poudre époxy , ou de résine poudre polyester, à concurrence de 5 g/m² par couche .La ou les faces extérieures du renfort peuvent recevoir elles aussi la même résine que les couches (30,31) , permettant ainsi la liaison éventuelle à chaud et par pression, avec d'autres renforts éventuels.

Le renfort global (20) présente une masse surfacique de l'ordre de 3600 g/m². Elle est sensiblement de 910 g/m² pour les fils orientés à 0°, + 45°, + 90° et -45° par rapport à la direction des fils de chaîne. On notera que les fils parallèles à la direction de la chaîne sont répartis sur les trois couches du renfort.

Il ressort de ce qui précède que l'invention conforme à l'invention présente l'avantage de posséder plusieurs directions de rigidité privilégiée, avec un nombre de couches nécessaires qui est inférieur à celui observé dans les solutions de l'art antérieur. Il possède en outre une grande déformabilité, en particulier lors d'un préformage à chaud : en effet, le ramollissement par chauffage (à des températures de l'ordre de 120°C) de la résine de liaison entre les couches, permet le glissement des couches du renfort entre elles, et l'aptitude de chaque couche à se déformer individuellement, font que l'ensemble du renfort est déformable facilement.

**Revendications**

1. Textile tissé (1), à base de fils de haute ténacité et notamment de fils de verre, destiné à former des renforts pour des pièces obtenues par moulage par transfert de résine (RTM), comportant dans le sens trame des fils (3) non perpendiculaires aux fils de chaîne (2), **caractérisé en ce que** le rapport

$$\frac{T_c.D_c}{T_t.D_t}$$ est compris entre 0,2 et 0,8 , où :

   $T_c$ représente le titre des fils de chaîne (2),
   $T_t$ représente le titre des fils de trame (3),
   $D_c$ représente le nombre de fils de chaîne (2) par unité de longueur,
   $D_t$ représente le nombre de fils de trame (3) par unité de longueur.

2. Textile tissé selon la revendication 1, **caractérisé en ce que** l'inclinaison des fils de trame (3) par rapport aux fils de chaîne (2) est comprise entre 30 et 80°.

3. Textile tissé selon la revendication 1, **caractérisé en ce que** l'armure de tissage est du type sergé, notamment sergé 2 lie 2.

4. Renfort (10) formé d'au moins deux couches textiles selon l'une des revendications 1 à 3, superposées (11,12), dont les fils de chaîne (13,14) sont parallèles d'une couche (11) à l'autre (12), et dont les fils de trame (15,16) présentent une inclinaison symétrique par rapport à la direction des fils de chaîne (13,14), d'une couche à l'autre.

5. Renfort (10) selon la revendication 4, **caractérisé en ce qu'**il comporte deux couches superposées, dont chacune présente un rapport $\dfrac{T_c . D_c}{T_t . D_t}$ compris entre 0,3 et 0,8 , et préférentiellement est voisin de 0,5.

6. Renfort (10) selon la revendication 5, **caractérisé en ce que** l'inclinaison des fils de trame (15,16) par rapport aux fils de chaîne (13,14) est voisine de 60°.

7. Renfort (10) selon la revendication 4, **caractérisé en ce qu'**il comporte trois couches superposées (21,22,23), à savoir deux couches (21,23) selon la revendication 1, présentant des fils de trame (24,25) inclinés par rapport aux fils de chaîne (26), et une couche (22) de textile tissé à base de fils de verre, à fils de chaîne (27) et de trame (28) perpendiculaires, chacune de ces couches (21,23) présentant un rapport $\dfrac{T_c . D_c}{T_t . D_t}$ compris entre 0,2 et 0,8, et préférentiellement voisin de 0,33.

8. Renfort selon la revendication 7, **caractérisé en ce que** les fils de trame (24,25) des couches inclinées (21,23) présentent une inclinaison voisine de 45°.

9. Renfort selon la revendication 4, **caractérisé en ce que** les couches sont assemblées par collage.

10. Renfort selon la revendication 9, **caractérisé en ce que** le collage est réalisé par un matériau de même nature chimique que celui du procédé de moulage.

**Claims**

1. A woven cloth (1) based on high-tenacity yarns, in particular fibreglass yarns, used for reinforcing parts obtained by Resin Transfer Moulding (RTM) and comprising threads (3) which are arranged in a weft direction and are not perpendicular to the warp threads (2), **characterised in that** the ratio

$\dfrac{T_c \bullet D_c}{T_t \bullet D_t}$ ranges from 0.2 to 0.8 where:

$T_c$ is the warp (2) thread number (linear density),
$T_t$ is the weft (3) thread number (linear density),
$D_c$ is the number of warp threads (2) per length unit,
$D_t$ is the number of weft threads (3) per length unit.

2. A woven cloth as claimed in claim 1, **characterised in that** the inclination of the weft threads (3) relative to the warp threads (2) is from 30 to 80°.

3. A woven cloth as claimed in claim 1, **characterised in that** the weave is of the twill type, in particular 2/2 twill.

4. A reinforcing part (10) formed by at least two textile layers as claimed in any of claims 1 to 3, placed one above the other (11, 12), the warp threads of which (13, 14) are parallel from one layer (11) to the other (12) and the weft threads of which (15, 16) have a symmetrical inclination relative to the direction of the warp threads (13, 14) from one layer to the other.

5. A reinforcing part (10) as claimed in claim 4, **characterised in that** it comprises two layers placed one above the other, each of which has a ratio $\dfrac{T_c \bullet D_c}{T_t \bullet D_t}$ of 0.3 to 0.8 and preferably approximately 0.5.

6. A reinforcing part (10) as claimed in claim 5, **characterised in that** the inclination of the weft threads (15, 16) relative to the warp threads (13, 14) is approximately 60°.

7. A reinforcing part (10) as claimed in claim 4, **characterised in that** it comprises three layers placed one above the other (21, 22, 23), namely two layers (21, 23) as claimed in claim 1 having weft threads (24, 25) that are inclined relative to the warp threads (26) and one layer (22) of woven cloth based on fibreglass yarns with perpendicular warp (27) and weft (28) threads, each of these layers (21, 23) having a ratio $\dfrac{T_c \bullet D_c}{T_t \bullet D_t}$ of 0.2 to 0.8 and preferably approximately 0.33.

8. A reinforcing part as claimed in claim 7, **characterised in that** the weft threads (24, 25) of the inclined layers (21, 23) have an inclination of approximately 45°.

9. A reinforcing part as claimed in claim 4, **characterised in that** the layers are assembled by bonding.

10. A reinforcing part as claimed in claim 9, **characterised in that** bonding is obtained using a material having the same chemical nature as that used in the moulding process.

**Patentansprüche**

1. Gewebtes Textil (1) auf der Basis von Fäden hoher Zähigkeit und insbesondere von Glasfäden, das dazu bestimmt ist, Verstärkungen für Teile zu bilden, die durch Formung durch Harzübertragung (RTM) hergestellt wurden, und das in Schussrichtung zu den Kettfäden (2) nicht senkrechte Fäden (3) umfasst, **dadurch gekennzeichnet, dass** das Verhältnis $\dfrac{T_c \cdot D_c}{T_t \cdot D_t}$ zwischen 0,2 und 0,8 beträgt, worin:

   $T_c$ den Titer der Kettfäden (2) darstellt,
   $T_t$ den Titer der Schussfäden (3) darstellt,
   $D_c$ die Anzahl von Kettfäden (2) pro Längeneinheit darstellt,
   $D_t$ die Anzahl von Schussfäden (3) pro Längeneinheit darstellt.

2. Gewebtes Textil nach Anspruch 1, **dadurch gekennzeichnet, dass** die Neigung der Schussfäden (3) bezüglich der Kettfäden (2) zwischen 30 und 80° beträgt.

3. Gewebtes Textil nach Anspruch 1, **dadurch gekennzeichnet, dass** die Webbindung vom Typ Köper ist, insbesondere Köper 2x2.

4. Verstärkung (10), die von mindestens zwei übereinander gelegten Textilschichten (11, 12) nach einem der Ansprüche 1 bis 3 gebildet ist, deren Kettfäden (13, 14) von einer Schicht (11) zur anderen (12) parallel sind und deren Schussfäden (15, 16) von einer Schicht zur anderen eine bezüglich der Richtung der Kettfäden (13, 14) symmetrische Neigung aufweisen.

5. Verstärkung (10) nach Anspruch 4, **dadurch gekennzeichnet, dass** sie zwei übereinander gelegte Schichten umfasst, deren jede ein Verhältnis $\dfrac{T_c \cdot D_c}{T_t \cdot D_t}$ zwischen 0,3 und 0,8 und vorzugsweise von nahe 0,5 aufweist.

6. Verstärkung (10) nach Anspruch 5, **dadurch gekennzeichnet, dass** die Neigung der Schussfäden (15, 16) bezüglich der Kettfäden (13, 14) nahe 60° ist.

7. Verstärkung (10) nach Anspruch 4, **dadurch gekennzeichnet, dass** sie drei übereinander gelegte Schichten (21, 22, 23) umfasst, und zwar zwei Schichten (21, 23) nach Anspruch 1, die bezüglich der Kettfäden (26) geneigte Schussfäden (24, 25) aufweisen, und eine Schicht (22) von gewebtem Textil auf der Basis von Glasfäden mit zueinander senkrechten Kettfäden (27) und Schussfäden (28), wobei jede dieser Schichten (21, 23) ein Verhältnis $\dfrac{T_c \cdot D_c}{T_t \cdot D_t}$ zwischen 0,2 und 0,8 und vorzugsweise von nahe 0,33 aufweist.

8. Verstärkung nach Anspruch 7, **dadurch gekennzeichnet, dass** die Schussfäden (24, 25) der geneigten Schichten (21, 23) eine Neigung von nahe 45° aufweisen.

9. Verstärkung nach Anspruch 4, **dadurch gekennzeichnet, dass** die Schichten durch Verklebung zusammengefügt sind.

10. Verstärkung nach Anspruch 9, **dadurch gekennzeichnet, dass** die Verklebung durch einen Werkstoff derselben chemischen Natur wie der des Formungsverfahrens hergestellt ist.

2

3

1

**Fig. 1**

13    15

11

10

**Fig. 2**

12

14    16

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0193479 A
- US 4055697 A
- EP 193479 A